# EUROPÄISCHE PATENTANMELDUNG

(11) **EP 2 141 419 A1**
(43) Veröffentlichungstag der Anmeldung: **06.01.2010**
(21) Anmeldenummer: 08012158.5
(22) Anmeldetag: 04.07.2008
(51) Int. Cl.: F24D 19/10

(54) **Gebäudeheiz- und/oder -kühlvorrichtung**

(71) Anmelder: Roth Werke GmbH, 35232 Dautphetal (DE)
(72) Erfinder:
(74) Vertreter: Rohmann, Michael

(57) **Zusammenfassung**

Gebäudeheiz- und/oder -kühlvorrichtung mit zumindest einer elektrisch betriebenen Wärmepumpe zur Erzeugung und zur Übertragung von thermischer Energie. Es ist zumindest eine Photovoltaikeinrichtung vorgesehen, von der die Wärmepumpe mit elektrischer Energie versorgt wird.

## Beschreibung

Die Erfindung betrifft eine Gebäudeheiz- und/oder -kühlvorrichtung mit zumindest einer elektrisch betriebenen Wärmepumpe zur Erzeugung und zur Übertragung von thermischer Energie. Die Erfindung betrifft fernerhin ein Verfahren zum Heizen und/oder Kühlen eines Gebäudes. - Die erfindungsgemäße Vorrichtung und das erfindungsgemäße Verfahren eignen sich grundsätzlich nicht nur zum Heizen sondern auch zum Kühlen eines Gebäudes bzw. Bauwerkes. Nichtsdestoweniger wird nachfolgend der Einfachheit halber in erster Linie auf das Heizen eines Gebäudes Bezug genommen und es werden die Begriffe Gebäudeheizvorrichtung bzw. einfach verkürzt Vorrichtung verwendet. Durch entsprechende Anpassung bzw. Umrüstung der Vorrichtung ist aber auch ein Kühlen eines Gebäudes möglich.

Vorrichtungen und Verfahren der vorstehend beschriebenen Art sind aus der Praxis in verschiedenen Ausführungsformen bekannt. Diese Vorrichtungen erzeugen die Energie zum Heizen, Kühlen und zur Brauchwasserbereitung teilweise mittels Umweltenergie, insbesondere Solarenergie. Nichtsdestoweniger benötigen sie aber auch eine relativ hohe Menge elektrischer Energie aus überörtlicher Kraftwerksproduktion bzw. aus einem überörtlichen Stromnetz. Der Einsatz dieser elektrischen Energie verursacht verhältnismäßig hohe Kosten. Außerdem trägt die Energieentnahme nicht unbeachtlich zum Ressourcenverbrauch und zur Umweltbelastung bei. Die Verwendung von elektrischem Strom aus der Kraftwerksproduktion bedingt vor allem eine hohe Kohlendioxidbelastung mit allen bekannten negativen Folgen.

Demgegenüber liegt der Erfindung das technische Problem zugrunde eine Vorrichtung der eingangs genannten Art anzugeben, mit der die geschilderten Nachteile vermieden werden können und die ausschließlich oder fast ausschließlich auf Umweltenergie zurückgreift. Fernerhin liegt der Erfindung das technische Problem zugrunde, ein entsprechendes Verfahren anzugeben.

Zur Lösung dieses technischen Problems lehrt die Erfindung eine Gebäudeheiz- und/oder -kühlvorrichtung mit zumindest einer elektrisch betriebenen Wärmepumpe zur Erzeugung und zur Übertragung von thermischer Energie, wobei zumindest eine Photovoltaikeinrichtung vorgesehen ist, von der die Wärmepumpe mit elektrischer Energie versorgt wird.

Die erfindungsgemäße Vorrichtung eignet sich zum Heizen und/oder Kühlen eines Gebäudes und auch zur Brauchwassererwärmung für ein Gebäude. Photovoltaikeinrichtung meint eine Einrichtung zur Umwandlung von Strahlungsenergie bzw. Sonnenenergie in elektrische Energie. Dass die Wärmepumpe von der Photovoltaikeinrichtung mit elektrischer Energie versorgt wird, meint insbesondere, dass die mit der Photovoltaikeinrichtung erzeugte elektrische Energie zunächst in das öffentliche Stromnetz eingespeist wird und die Wärmepumpe mit elektrischer Energie aus diesem Stromnetz versorgt wird. Zweckmäßigerweise wird also die Wärmepumpe indirekt von der Photovoltaikeinrichtung unter Zwischenschaltung des öffentlichen Stromnetzes versorgt. Diese indirekte Versorgung mit elektrischem Strom wird bevorzugt auch bei den weiter unten noch beschriebenen Ausführungsformen gewählt, bei denen weitere Komponenten - beispielsweise Umwälzpumpen oder Regelungseinrichtungen - der erfindungsgemäßen Vorrichtung von der Photovoltaikeinrichtung mit elektrischem Strom versorgt werden. Erfindungsgemäß wird also die für den Betrieb der Wärmepumpe sowie ggf. für den Betrieb weiterer Komponenten der Vorrichtung erforderliche elektrische Energie von der Photovoltaikeinrichtung - zweckmäßigerweise indirekt - zur Verfügung gestellt bzw. so weit wie möglich zur Verfügung gestellt. Bevorzugt ist dabei eine hundertprozentige Energiedeckung. - Nach einer anderen Ausführungsform der Erfindung kann die Photovoltaikeinrichtung die Wärmepumpe und ggf. weitere Komponenten der Vorrichtung auch unmittelbar mit elektrischer Energie versorgen. Dann erfolgt also keine Zwischenschaltung des öffentlichen Stromnetzes.

Es liegt im Rahmen der Erfindung, dass die Photovoltaikeinrichtung mit Solarzellen arbeitet. Es liegt weiterhin im Rahmen der Erfindung, dass Komponenten der Photovoltaikeinrichtung, insbesondere Solarzellen der Photovoltaikeinrichtung im Außenbereich bzw. an der Außenseite des Gebäudes angeordnet werden. So können diese Komponenten bzw. Solarzellen insbesondere auf dem Dach eines Gebäudes vorgesehen werden. Eine sehr bevorzugte Ausführungsform der Erfindung ist dadurch gekennzeichnet, dass die Photovoltaikeinrichtung und insbesondere Größe und/oder die Leistung und/oder die Anordnung der Photovoltaikeinrichtung auf den Energiebedarf der Wärmepumpe abgestimmt ist. Die Photovoltaikeinrichtung wird empfohlenermaßen so ausgelegt bzw. ausgewählt, dass sie die für die erfindungsgemäße Vorrichtung erforderliche elektrische Energie liefern kann, und zwar insbesondere die elektrische Energie für den Betrieb der Wärmepumpe und ggf. auch elektrische Energie für weitere Vorrichtungskomponenten und/oder für die Steuerung und/oder Regelung der erfindungsgemäßen Vorrichtung. Gemäß einer Ausführungsvariante kann die Photovoltaikeinrichtung die gesamte elektrische Energie für den Betrieb der erfindungsgemäßen Vorrichtung bzw. im Wesentlichen die gesamte elektrische Energie für den Betrieb der Vorrichtung zur Verfügung stellen. Wie oben bereits dargelegt, wird vorzugsweise die von der Photovoltaikeinrichtung zur Verfügung gestellte elektrische Energie zunächst in das öffentliche Netz eingespeist und die Wärmepumpe bzw. die Vorrichtung wird dann mit elektrischer Energie aus diesem Netz versorgt.

Die im Rahmen der erfindungsgemäßen Vorrichtung eingesetzte Wärmepumpe kann als Flüssig-Flüssig-Wärmepumpe und/oder als Gas-Flüssig-Wärmepumpe und/oder als Gas-Gas-Wärmepumpe betrieben werden. Als flüssiges Medium wird dabei bevorzugt Wasser und/oder Sole (Gemisch Wasser/Frostschutzmittel) gewählt. Als gasförmiges Medium wird zweckmäßigerweise Luft eingesetzt. Außer mit einer Flüssig-Flüssig-Wärmepumpe kann im Rahmen der Erfindung also auch mit einer Luft-Wasser-Wärmepumpe und/oder Luft-Luft-Wärmepumpe gearbeitet werden.

Es liegt im Rahmen der Erfindung, dass die für die Vorrichtung erforderliche thermische Energie einerseits mit der Wärmepumpe und andererseits mit einer Solareinrichtung erzeugt wird und dass Wärmepumpe und Solareinrichtung bezüglich des thermischen Energiebedarfs aufeinander abgestimmt werden. Zweckmäßigerweise ist die Wärmepumpe mit zumindest einer Solareinrichtung mit der Maßgabe verbunden, dass von der Solareinrichtung erzeugte thermische Energie der Wärmepumpe zur Verfügung gestellt werden kann. Eine besonders bevorzugte Ausführungsform der Erfindung ist dadurch gekennzeichnet, dass die Wärmepumpe mit zumindest einer Solareinrichtung mit der Maßgabe verbunden ist, dass von der Solareinrichtung erzeugte thermische Energie mittels zumindest eines Wärmeträgermediums direkt oder indirekt auf ein fluides Medium der Wärmepumpe übertragbar ist und dass zusätzliche thermische Energie von der Wärmepumpe auf das fluide Medium übertragbar ist. Dass mit der Solareinrichtung thermische Energie erzeugt wird, meint, dass die thermische Energie von der Solareinrichtung aufgenommen bzw. gespeichert wird. Empfohlenermaßen wird also die thermische Energie in der Solareinrichtung auf das Wärmeträgermedium übertragen und mit dem Wärmeträgermedium direkt oder indirekt zur Wärmepumpe geführt und dort mit der Wärmepumpe auf das fluide Medium übertragen, wobei die Wärmepumpe zusätzliche thermische Energie zur Erwärmung des fluiden Mediums auf die erforderliche Temperatur stellt. Mit indirekter Überführung ist vor allem gemeint, dass die thermische Energie zunächst in eine weiter unten noch näher erläuterte Erdwärmenutzungseinheit und/oder in eine Erdspeichereinheit überführt wird und von dort zur Wärmepumpe geführt werden kann.

Es liegt weiterhin im Rahmen der Erfindung, dass die thermische Energie der Solareinrichtung bzw. die thermische Energie des Wärmeträgermediums aus der Solareinrichtung unmittelbar - ohne Zwischenschaltung der Wärmepumpe - auf das fluide Medium übertragen werden kann. Empfohlenermaßen ist dazu ein entsprechender Wärmetauscher vorgesehen, mit dem die thermische Energie von dem Wärmeträgermedium der Solareinrichtung direkt auf das fluide Medium übertragen wird. Das erwärmte fluide Medium kann dann für einen Heizkreislauf eingesetzt werden und/oder zur Brauchwassererwärmung verwendet werden. Die unmittelbare Übertragung der thermischen Energie auf das fluide Medium - ohne Zwischenschaltung der Wärmepumpe - findet empfohlenermaßen dann statt, wenn die thermische Energie aus der Solareinrichtung bzw. die Temperatur / der Wärmegehalt des Wärmeträgermediums aus der Solareinrichtung hoch genug ist, um das fluide Medium unmittelbar zu erwärmen. Dass die von der Solareinrichtung erzeugte thermische Energie (bei Bedarf) direkt oder indirekt auf das fluide Medium der Wärmepumpe übertragen wird, bezieht sich insbesondere auf den Fall, in dem die thermische Energie aus der Solareinrichtung bzw. die Temperatur / der Wärmegehalt des Wärmeträgermediums aus der Solareinrichtung für eine unmittelbare Übertragung der thermischen Energie auf das fluide Medium nicht ausreichend hoch ist. In diesem Fall wird dann zweckmäßigerweise die Wärmepumpe zwischengeschaltet und von der Wärmepumpe wird zusätzliche thermische Energie bzw. die fehlende thermische Energie zur Erwärmung des fluiden Mediums zur Verfügung gestellt.

Eine besonders bevorzugte Ausführungsform der Erfindung ist dadurch gekennzeichnet, dass die Wärmepumpe mit zumindest einer Erdwärmenutzungseinheit und/oder Erdspeichereinheit mit der Maßgabe verbunden ist, dass in der Erdwärmenutzungseinheit und/oder Erdspeichereinheit gespeicherte thermische Energie (bei Bedarf) zur Wärmepumpe überführbar ist und mit der Wärmepumpe auf das fluide Medium übertragbar ist. Zweckmäßigerweise ist die Wärmepumpe mit zumindest einer Erdwärmenutzungseinheit und/oder Erdspeichereinheit mit der Maßgabe verbunden, dass in der Erdwärmenutzungseinheit und/oder in der Erdspeichereinheit gespeicherte thermische Energie mittels zumindest eines Wärmeträgermediums auf das fluide Medium der Wärmepumpe übertragbar ist und wobei zusätzliche thermische Energie von der Wärmepumpe auf das fluide Medium übertragbar ist. Erdwärmenutzungseinheit meint im Rahmen der Erfindung eine im Erdreich angeordnete Einrichtung, mit der zugeführte thermische Energie speicherbar ist bzw. die es ermöglicht, dass thermische Energie im Bereich der Erdwärmenutzungseinheit im Erdreich speicherbar ist. Im Rahmen der vorstehend beschriebenen Maßnahmen nimmt das Wärmeträgermedium also die im Erdreich gespeicherte thermische Energie auf und führt diese zur Wärmepumpe. Erdspeichereinheit meint im Rahmen der Erfindung zumindest einen im Erdreich angeordneten Speicherbehälter, zweckmäßigerweise isolierten Speicherbehälter, wobei der Speicherbehälter ein Speichermedium enthält. Die in der Erdspeichereinheit gespeicherte bzw. zwischengespeicherte thermische Energie kann mit einem Wärmeträgermedium der Wärmepumpe zugeführt werden. - Es versteht sich im Übrigen, dass entsprechende Leitungen bzw. Rohrleitungen für das Wärmeträgermedium vorhanden sind. Die in der Erwärmenutzungseinheit und/oder in der Erdspeichereinheit gespeicherte thermische Energie wird insbesondere dann zur Wärmepumpe überführt bzw. mit der Wärmepumpe auf das fluide Medium übertragen, wenn die thermische Energie aus der Solareinrichtung bzw. die Temperatur / der Wärmegehalt des Wärmeträgermediums aus der Solareinrichtung nicht hoch genug ist für eine unmittelbare Übertragung der thermischen Energie auf das fluide Medium.

Zweckmäßigerweise bezieht die Wärmepumpe thermische Energie aus der Solareinrichtung und/oder aus der Erdwärmenutzungseinheit und/oder aus der Erdspeichereinheit, wenn der vorgenannte Fall gegeben ist und die thermische Energie für die unmittelbare Übertragung bzw. für die unmittelbare Erwärmung des fluiden Mediums nicht ausreichend ist. Die Wärmepumpe stellt dann zusätzliche thermische Energie für die Erwärmung des fluiden Mediums zur Verfügung. Es liegt im Rahmen der Erfindung, dass die der Wärmepumpe zur Verfügung gestellte elektrische Energie in der Wärmepumpe in die zusätzliche thermische Energie umgewandelt wird. Es liegt weiterhin im Rahmen der Erfindung, dass die thermische Energie in Abhängigkeit von der jeweiligen Temperatur bzw. in Abhängigkeit von dem jeweiligen Wärmegehalt wahlweise der Solareinrichtung oder der Erdwärmenutzungseinheit/Erdspeichereinheit entnommen wird. Zweckmäßigerweise finden entsprechende Temperaturmessungen bzw. Wärmemengenmessungen statt.

Gemäß sehr empfohlener Ausführungsform ist die Solareinrichtung mit der Erdwärmenutzungseinheit mit der Maßgabe verbunden, dass in der Solareinrichtung erzeugte thermische Energie der Erdwärmenutzungseinheit zuführbar ist und dort im Erdreich speicherbar bzw. zwischenspeicherbar ist. Diese Überführung der thermischen Energie aus der Solareinrichtung in die Erdwärmenutzungseinheit zur Zwischenspeicherung wird insbesondere dann durchgeführt, wenn die Solareinrichtung einen Überschuss an thermischer Energie aufweist. Ein Überschuss an thermischer Energie in der Solareinrichtung liegt insbesondere dann vor, wenn mehr thermische Energie in der Solareinrichtung vorhanden ist als für die unmittelbare Erwärmung des fluiden Mediums mit der thermischen Energie der Solareinrichtung - ohne Zwischenschaltung der Wärmepumpe - erforderlich ist. - Vorzugsweise wird thermische Energie der Solareinrichtung auf ein Wärmeträgermedium übertragen und dieses Wärmeträgermedium wird anschließend über zumindest eine Leitung in die Erdwärmenutzungseinheit eingeführt und dort wird die thermische Energie im Erdreich gespeichert bzw. zwischengespeichert. Mit anderen Worten wird das Erdreich im Bereich der Erdwärmenutzungseinheit entsprechend erwärmt. Zweckmäßigerweise wird bei Bedarf diese im Erdreich gespeicherte thermische Energie mittels eines Wärmeträgermediums über zumindest eine Leitung an die Wärmepumpe übertragen bzw. an das fluide Medium der Wärmepumpe übertragen.

Nach einer anderen Ausführungsform ist die Solareinrichtung mit einer Erdspeichereinheit mit der Maßgabe verbunden, dass in der Solareinrichtung erzeugte thermische Energie der Erdspeichereinheit zuführbar und dort speicherbar bzw. zwischenspeicherbar ist. Diese Überführung der thermischen Energie aus der Solareinrichtung in die Erdspeichereinheit zur Zwischenspeicherung wird ebenfalls insbesondere dann durchgeführt, wenn die Solareinrichtung einen Überschuss an thermischer Energie aufweist. Die in der Erdspeichereinheit bzw. in dem zumindest einen Speicherbehälter der Speichereinheit gespeicherte thermische Energie wird bei Bedarf mittels eines Wärmeträgermediums über zumindest eine Leitung an die Wärmepumpe übertragen bzw. an das fluide Medium der Wärmepumpe übertragen.

Es liegt im Rahmen der Erfindung als fluides Medium ein flüssiges Medium, vorzugsweise Wasser oder Sole (Gemisch Wasser/Frostschutzmittel), einzusetzen. Als fluides Medium kann auch ein Gas, insbesondere Luft eingesetzt werden. - Es liegt fernerhin im Rahmen der Erfindung als Wärmeträgermedium ein flüssiges Wärmeträgermedium, insbesondere Wasser oder Sole (Gemisch Wasser/Frostschutzmittel) zu verwenden.

Eine besonders bevorzugte Ausführungsform der Erfindung ist dadurch gekennzeichnet, dass die Erdwärmenutzungseinheit bzw. die Erdspeichereinheit in einer Tiefe von 0,5 bis 5 m im Erdreich angeordnet ist. Tiefe meint hier den Abstand der Oberseite bzw. Oberkante der Erdwärmenutzungseinheit bzw. der Erdspeichereinheit von der Erdoberfläche. Es empfiehlt sich, dass die Erdwärmenutzungseinheit/Erdspeichereinheit zumindest 0,6 m vorzugsweise zumindest 0,8 m und bevorzugt zumindest 1 m von der Erdoberfläche beabstandet in dem Erdreich angeordnet ist. Nach bewährter Ausführungsform der Erfindung ist die Erdwärmenutzungseinheit/Erdspeichereinheit in einer Tiefe zwischen 0,5 und 4 m, empfohlenermaßen zwischen 0,5 und 3,5 m, zweckmäßigerweise zwischen 0,6 und 3 m, vorzugsweise zwischen 0,7 und 2,5 m und bevorzugt zwischen 0,8 und 2 m im Erdreich angeordnet.

Es liegt im Rahmen der Erfindung, dass die Erdwärmenutzungseinheit und/oder Erdspeichereinheit außerhalb des zugeordneten Gebäudes angeordnet ist. Vorzugsweise weist die Erdwärmenutzungseinheit zumindest eine Rohrregistereinrichtung auf. Empfohlenermaßen umfasst die Rohrregistereinrichtung eine zentrale bzw. mittige Verteilungseinheit, an die sternförmig Registereinheiten bzw. Kreisläufe für das Wärmeträgermedium angeschlossen sind.

Eine bevorzugte Ausführungsform zeichnet sich dadurch aus, dass die Photovoltaikeinrichtung elektrische Energie zur Steuerung und/oder Regelung der Vorrichtung zur Verfügung stellt. Gemäß dieser Ausführungsform liefert die Photovoltaikeinrichtung nicht nur die elektrische Energie für den Betrieb der Wärmepumpe sondern auch elektrische Energie zur Versorgung von Steuerungs- und/oder Regelungskomponenten der Vorrichtung. Wie oben bereits dargelegt, erfolgt die Versorgung mit der elektrischen Energie vorzugsweise indirekt unter Zwischenschaltung des öffentlichen Stromnetzes. - Es empfiehlt sich, dass Komponenten der Solareinrichtung und der Photovoltaikeinrichtung an der Außenseite des zugeordneten Gebäudes angebracht sind. Vorzugsweise sind die an der Außenseite des zugeordneten Gebäudes angebrachten Komponenten der Solareinrichtung und der Photovoltaikeinrichtung bezüglich ihrer Abmessungen und/oder ihrer Form und/oder ihrer Farbe identisch bzw. im Wesentlichen identisch. Außenseite des Gebäudes meint insbesondere das Dach des Gebäudes. Mit Komponenten der Einrichtungen sind vor allem Solarzellen bzw. Solarmodule gemeint. Zweckmäßigerweise wird die Vorrichtung so ausgelegt, dass die an der Außenseite des Gebäudes angebrachten Komponenten der Solareinrichtung und der Photovoltaikeinrichtung ein harmonisches Gesamtbild aufgrund ihres aufeinander abgestimmten Designs ergeben.

Gemäß einer Ausführungsvariante wird die Solareinrichtung mit zumindest einem Teil der Photovoltaikeinrichtung zu einer Einheit kombiniert. Der Photovoltaikanteil dieser Einheit kann dabei Standardelemente, insbesondere Solarzellen aufweisen. Nach einer bevorzugten Ausführungsform weist der Photovoltaikanteil der Einheit Solarfolien und besonders bevorzugt transparente Solarfolien auf.

Zur Lösung des technischen Problems lehrt die Erfindung weiterhin ein Verfahren zum Heizen und/oder Kühlen eines Gebäudes, wobei thermische Energie von zumindest einer elektrisch betriebenen Wärmepumpe auf ein fluides Medium übertragen wird und wobei elektrische Energie zum Betreiben der Wärmepumpe von zumindest einer Photovoltaikeinrichtung zur Verfügung gestellt wird. Das fluide Medium bzw. das erwärmte fluide Medium wird zweckmäßigerweise in einem Heizkreislauf für das Gebäude eingesetzt und/oder zur Brauchwassererwärmung für das Gebäude verwendet. Bevorzugte Ausführungsformen des erfindungsgemäßen Verfahrens werden in den Patentansprüchen 11 bis 13 beansprucht.

Der Erfindung liegt die Erkenntnis zugrunde, dass mit der erfindungsgemäßen Vorrichtung und mit dem erfindungsgemäßen Verfahren eine überraschend einfache und effektive Lösung des technischen Problems möglich ist. Die Vorrichtung kann in vorteilhafter Weise ausschließlich oder fast ausschließlich durch Inanspruchnahme von Umweltenergie betrieben werden. Zusätzliche elektrische Energie aus dem überörtlichen Stromnetz, die insbesondere der Kraftwerksproduktion entstammt, ist für den Betrieb der erfindungsgemäßen Vorrichtung bzw. des erfindungsgemäßen Verfahrens nicht oder kaum erforderlich. Dadurch werden zunächst beachtliche Kosten eingespart. Mit der Erfindung wird in vorteilhafter Weise eine Unabhängigkeit von externen Energien (beispielsweise Strom, Heizöl, Gas) gewährleistet. Insoweit ist der Gegenstand der Erfindung auch von steigenden Energiepreisen unabhängig. Fernerhin wird in umwelttechnischer Hinsicht ein Ressourcenschutz durch Vermeidung konventioneller Energien wie Öl, Gas, Kohle und Holz gesichert. Außerdem wird ein 100 %iger Umweltschutz durch kohlendioxidfreie Energieerzeugung gewährleistet. Der Betrieb der erfindungsgemäßen Vorrichtung bzw. des erfindungsgemäßen Verfahrens ist auf einfache und kostengünstige Weise möglich.

Nachfolgend wird die Erfindung anhand einer lediglich ein Ausführungsbeispiel darstellenden Zeichnung näher erläutert. Es zeigen in schematischer Darstellung:
- Fig. 1: eine erste Ausführungsform der erfindungsgemäßen Vorrichtung und
- Fig. 2: eine zweite Ausführungsform des Gegenstandes nach Fig. 1.

In den Figuren ist eine Vorrichtung zum Heizen eines Gebäudes bzw. zur Brauchwassererwärmung für ein Gebäude dargestellt. Soweit nachfolgend von dem fluiden Medium die Rede ist, handelt es sich vorzugsweise um Wasser oder um Sole. Die in den Figuren dargestellte Vorrichtung weist eine elektrisch betriebene Wärmepumpe 1 zur Erzeugung und zur Übertragung von thermischer Energie auf das fluide Medium auf. Es ist eine Photovoltaikeinrichtung 2 vorgesehen, die die Wärmepumpe 1 indirekt mit elektrischer Energie bzw. mit elektrischem Strom versorgt. Dazu wird der von der Photovoltaikeinrichtung 2 erzeugte elektrische Strom in das öffentliche Netz N eingespeist. Die Wärmepumpe 1 wird dann mit elektrischer Energie bzw. mit elektrischem Strom aus dem öffentlichen Netz versorgt. Die Photovoltaikeinrichtung 2 weist zweckmäßigerweise eine Mehrzahl von Solarzellen bzw. Solarmodulen auf. Vorzugsweise und im Ausführungsbeispiel sind diese Komponenten bzw. die Solarzellen/Solarmodule der Photovoltailkeinrichtung 2 an der Außenseite des Gebäudes und insbesondere auf dem Dach des Gehäuses angeordnet. Es liegt im Rahmen der Erfindung, dass die Photovoltaikeinrichtung 2 mit der Maßgabe ausgelegt ist, dass sie die für den Betrieb der Wärmepumpe erforderliche elektrische Energie zur Verfügung stellen kann bzw. zumindest größtenteils zur Verfügung stellen kann. Es liegt fernerhin im Rahmen der Erfindung, dass die Größe und/oder die Leistung und/oder die Anordnung der Photovoltaikeinrichtung entsprechend ausgelegt wird.

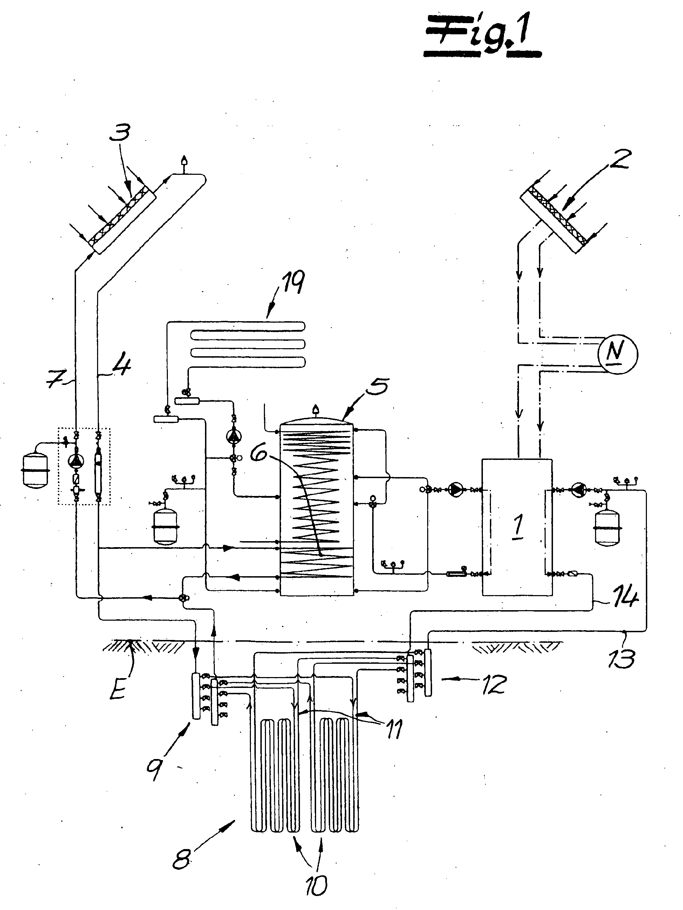

Fig. 1 zeigt eine erste Ausführungsform der erfindungsgemäßen Vorrichtung zur Erwärmung des fluiden Mediums. In der Solareinrichtung 3 wird ein Wärmeträgermedium erwärmt und in einem ersten Betriebsmodus über die Versorgungsleitung 4 zur unmittelbaren Erwärmung des fluiden Mediums - ohne Zwischenschaltung der Wärmepumpe 1 - abgeführt. Dieser erste Betriebsmodus wird dann gewählt, wenn die thermische Energie der Solareinrichtung 3 bzw. die Temperatur des Wärmeträgermediums aus der Solareinrichtung 3 ausreichend hoch zur unmittelbaren Erwärmung des fluiden Mediums ist. Bei diesem ersten Betriebsmodus wird das in der Solareinrichtung 3 erwärmte Wärmeträgermedium in einen in einem Kessel 5 angeordneten Wärmetauscher 6 eingeführt. In diesem Kessel 5 befindest sich das fluide Medium und die mit dem Wärmeträgermedium mitgeführte thermische Energie kann auf das zu erwärmende fluide Medium getauscht werden. Das durch diesen Wärmetauschprozess abgekühlte Wärmeträgermedium wird durch die Rückführungsleitung 7 wieder zurück zur Solareinrichtung 3 gefördert.

In einem zweiten Betriebsmodus der Vorrichtung aus Fig. 1 wird das in der Solareinrichtung 3 erwärmte Wärmeträgermedium über die Versorgungsleitung 4 zu einer Erdwärmenutzungseinheit 8 gefördert und von dem Wärmeträgermedium mitgeführte thermische Energie wird in dem Erdreich E gespeichert bzw. zwischengespeichert. Diese Überführung der thermischen Energie aus der Solareinrichtung 3 in die Erdwärmenutzungseinheit 8 zur Zwischenspeicherung wird insbesondere dann durchgeführt, wenn die Solareinrichtung 3 einen Überschuss an thermischer Energie aufweist. Ein Überschuss an thermischer Energie in der Solareinrichtung 3 liegt insbesondere dann vor, wenn mehr thermische Energie in der Solareinrichtung 3 zur Verfügung steht als für die unmittelbare Erwärmung des fluiden Mediums - ohne Zwischenschaltung einer Wärmepumpe - erforderlich ist. Bei der Einführung in die Erdwärmenutzungseinheit 8 wird das Wärmeträgermedium durch eine Verteilungseinheit 9 zwei Primärkreisläufen 10 zugeführt. Auf diese Weise wird die in der Solareinrichtung 3 auf das Wärmeträgermedium übertragene thermische Energie in die Erdwärmenutzungseinheit 8 gefördert und auf das Erdreich E übertragen bzw. im Erdreich E gespeichert. Das durch das Erdreich E abgekühlte Wärmeträgermedium wird durch die Verteilungseinheit 9 der Rückführungsleitung 7 zugeleitet und strömt durch die Rückführungsleitung 7 zurück zu der Solareinrichtung 3. Weiterhin sind in der Erdwärmenutzungseinheit 8 zwei Sekundärkreisläufe 11 vorgesehen, die mit einer Verteilungseinheit 12 verbunden sind. In den Sekundärkreisläufen 11 befindet sich im Ausführungsbeispiel nach Fig. 1 ein zweites Wärmeträgermedium und mit diesem zweiten Wärmeträgermedium kann die im Erdreich E gespeicherte thermische Energie durch eine Zuleitung 13 zur Wärmepumpe 1 gefördert werden. Diese Förderung der thermischen Energie aus der Erdwärmenutzungseinheit 8 zur Wärmepumpe 1 findet insbesondere dann statt, wenn die thermische Energie der Solareinrichtung 3 bzw. die Temperatur des Wärmeträgermediums aus der Solareinrichtung 3 geringer ist als die thermische Energie in der Erdwärmenutzungseinheit 8 bzw. die Temperatur des Wärmeträgermediums in der Erdwärmenutzungseinheit 8.

In der Wärmepumpe 1 erfolgt eine Übertragung der thermischen Energie von dem zweiten Wärmeträgermedium auf das zu erwärmende fluide Medium und dem fluiden Medium wird mit der Wärmepumpe 1 zusätzliche thermische Energie zugeführt, bis es die gewünschte Temperatur aufweist. Das erwärmte fluide Medium wird dann in den Kessel 5 gepumpt. Das durch diesen Wärmetauschprozess abgekühlte zweite Wärmeträgermedium wird mittels einer Abflussleitung 14 von der Wärmepumpe 1 zurück über die Verteilungseinheit 12 den Sekundärkreisläufen 11 zugeleitet. Das in dem Kessel 5 vorrätig gehaltene erwärmte fluide Medium wird insbesondere für einen Heizkreislauf 19 in dem Gebäude verwendet und zweckmäßigerweise für Bereitstellung von erwärmtem Brauchwasser eingesetzt.

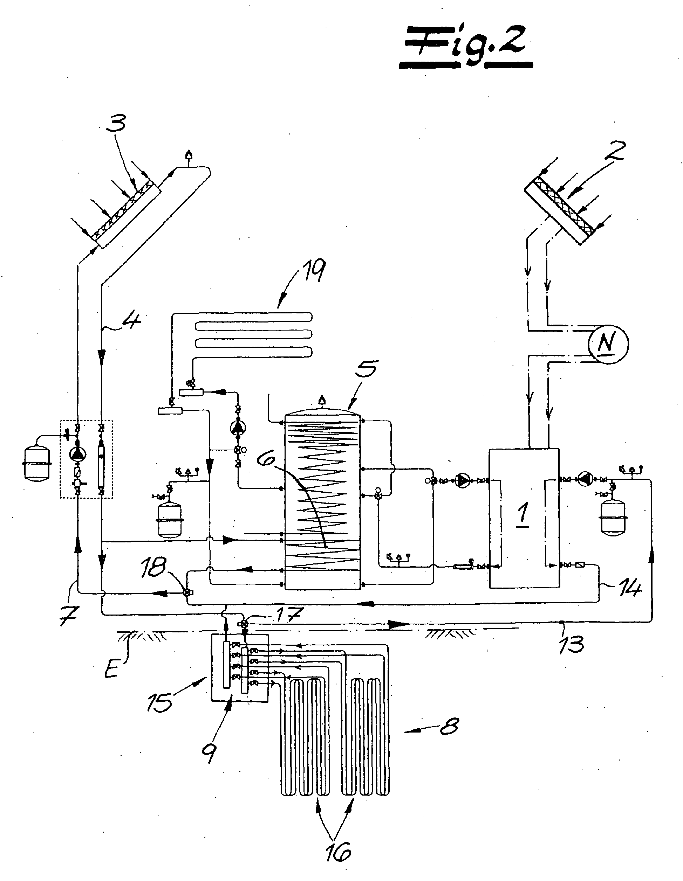

In Fig. 2 ist eine zweite Ausführungsform der erfindungsgemäßen Vorrichtung zur Erwärmung eines fluiden Mediums dargestellt. Auch hier kann in einem ersten Betriebsmodus das in der Solareinrichtung 3 erwärmte Wärmeträgermedium über die Versorgungsleitung 4 zur unmittelbaren Erwärmung des fluiden Medium dem im Kessel 5 angeordneten Wärmetauscher 6 zugeführt werden. Das in dem Wärmetauscher 6 abgekühlte Wärmeträgermedium kann über die Rückführungsleitung 7 wieder der Solareinrichtung 3 zugeführt werden. Der erste Betriebsmodus wird insbesondere dann gewählt, wenn die thermische Energie aus der Solareinrichtung 3 bzw. die Temperatur / der Wärmegehalt des Wärmeträgermediums aus der Solareinrichtung 3 ausreichend hoch zur unmittelbaren Erwärmung des fluiden Mediums ohne Zwischenschaltung der Wärmepumpe 1 ist. Wenn die thermische Energie aus der Solareinrichtung 3 aber nicht ausreichend hoch ist, kann in einem zweiten Betriebsmodus das in der Solareinrichtung 3 erwärmte Wärmeträgermedium über die Versorgungsleitung 4 und bei entsprechender Einstellung des Dreiwegeventils 17 über die Zuleitung 13 direkt der Wärmepumpe 1 zugeführt werden. In der Wärmepumpe 1 wird die thermische Energie des Wärmeträgermediums aus der Solareinrichtung 3 auf das fluide Medium übertragen und die Wärmepumpe 1 stellt zusätzliche thermische Energie zur Erwärmung des fluiden Mediums auf die erforderliche Temperatur erwärmt zur Verfügung. Das erwärmte fluide Medium wird dem Kessel 5 zugeführt. Das durch diesen Wärmetauschprozess abgekühlte Wärmeträgermedium wird über die Abflussleitung 14 bei entsprechend eingestelltem Dreiwegeventil 18 über die Rückführungsleitung 7 wieder der Solareinrichtung 3 zugeführt.

Das in der Solareinrichtung 3 erwärmte Wärmeträgermedium kann in einem dritten Betriebsmodus weiterhin auch über die Versorgungsleitung 4 bei entsprechend eingestelltem Dreiwegeventil 17 in die Erdwärmenutzungseinheit 8 eingeführt werden und hier wird die thermische Energie des Wärmeträgermediums zwischengespeichert. Wie oben bereits dargelegt, erfolgt diese Zwischenspeicherung der thermischen Energie in der Erdwärmenutzungseinheit 8 insbesondere dann, wenn in der Solareinrichtung ein Überschuss an thermischer Energie vorliegt. Vorzugsweise und im Ausführungsbeispiel nach Fig. 2 weist die Erdwärmenutzungseinheit 8 eine Rohrregistereinrichtung 15 auf. Diese Rohrregistereinrichtung 15 umfasst eine zentrale bzw. mittige Verteilungseinheit 9, an die Kreisläufe 16 für das Wärmeträgermedium angeschlossen sind, wobei die Kreisläufe 16 die Verteilungseinheit 9 sternförmig umgeben (in Fig. 2 nicht näher dargestellt). Die in der Erdwärmenutzungseinheit 8 zwischengespeicherte thermische Energie kann bei Bedarf mit dem Wärmeträgermedium bei entsprechend eingestelltem Dreiwegeventil 17 über die Zuleitung 13 der Wärmepumpe 1 zugeführt werden. Hier wird die thermische Energie von dem Wärmeträgermedium auf das fluide Medium übertragen und dem fluidem Medium wird durch die Wärmepumpe 1 zusätzliche thermische Energie zugeführt bis die gewünschte Temperatur des fluiden Mediums erreicht ist. Das fluide Medium kann dann wieder von der Wärmepumpe 1 zum Kessel 5 geführt werden. Das bei dem vorstehend beschriebenen Wärmeaustausch abgekühlte Wärmeträgermedium wird dann zweckmäßigerweise über die Abflussleitung 14 und die Rückführungsleitung 7 zur Solareinrichtung 3 zurückgeführt.

Das Wärmeträgermedium mit der zwischengespeicherten thermischen Energie wird insbesondere dann von der Erdwärmenutzungseinheit 8 zu der Wärmepumpe 1 geführt, wenn die Temperatur des Wärmeträgermediums in der Solareinrichtung 3 geringer ist als die Temperatur des Wärmeträgermediums in der Erdwärmenutzungseinheit 8. Wenn dagegen die Temperatur des Wärmeträgermediums in der Solareinrichtung 3 höher ist als die Temperatur des Wärmeträgermediums in der Erdwärmenutzungseinheit 8 wird das Wärmeträgermedium von der Solareinrichtung 3 unmittelbar zur Wärmepumpe 1 geführt oder wenn die Temperatur des Wärmeträgermediums in der Solareinrichtung 3 für eine unmittelbare Erwärmung des fluiden Mediums - ohne Zwischenschaltung der Wärmepumpe 1 - ausreicht, unmittelbar zum Wärmetauscher 6 in den Kessel 5 geführt.

## Patentansprüche

1. Gebäudeheiz- und/oder -kühlvorrichtung mit zumindest einer elektrisch betriebenen Wärmepumpe (1) zur Erzeugung und zur Übertragung von thermischer Energie, wobei zumindest eine Photovoltaikeinrichtung vorgesehen ist, von der die Wärmepumpe (1) mit elektrischer Energie versorgt wird.

2. Gebäudeheiz- und/oder -kühlvorrichtung nach Anspruch 1, wobei die Wärmepumpe als Flüssig-Flüssig-Wärmepumpe und/oder als Gas-Flüssig-Wärmepumpe und/oder als Gas-Gas-Wärmepumpe betrieben wird.

3. Gebäudeheiz- und/oder -kühlvorrichtung nach einem der Ansprüche 1 oder 2, wobei die Wärmepumpe (1) mit zumindest einer Solareinrichtung (3) mit der Maßgabe verbunden ist, dass von der Solareinrichtung (3) erzeugte thermische Energie mittels zumindest eines Wärmeträgermediums direkt oder indirekt auf ein fluides Medium der Wärmepumpe übertragbar ist und wobei weitere thermische Energie mit der Wärmepumpe (1) auf das fluide Medium übertragbar ist.

4. Gebäudeheiz- und/oder -kühlvorrichtung nach einem der Ansprüche 1 oder 3, wobei die Wärmepumpe (1) mit zumindest einer Erdwärmenutzungseinheit (8) und/oder Erdspeichereinheit mit der Maßgabe verbunden ist, dass in der Erdwärmenutzungseinheit (8) und/oder in der Erdspeichereinheit gespeicherte thermische Energie mittels zumindest eines Wärmeträgermediums auf das fluide Medium der Wärmepumpe (1) übertragbar ist und wobei weitere thermische Energie mit der Wärmepumpe (1) auf das fluide Medium übertragbar ist.

5. Gebäudeheiz- und/oder -kühlvorrichtung nach einem der Ansprüche 3 oder 4, wobei die Solareinrichtung (3) mit der Erdwärmenutzungseinheit (8) und/oder der Erdspeichereinheit mit der Maßgabe verbunden ist, dass in der Solareinrichtung (3) erzeugte thermische Energie der Erdwärmenutzungseinheit (8) und/oder der Erdspeichereinheit zuführbar ist und im Erdreich und/oder in zumindest einem Speicherbehälter der Erdspeichereinheit speicherbar bzw. zwischenspeicherbar ist.

6. Gebäudeheiz- und/oder -kühlvorrichtung nach einem der Ansprüche 3 oder 5, wobei die Erdwärmenutzungseinheit (8) bzw. Erdspeichereinheit in einer Tiefe von 0,5 bis 5 m im Erdreich angeordnet ist.

7. Gebäudeheiz- und/oder -kühlvorrichtung nach einem der Ansprüche 4 bis 6, wobei die Erdwärmenutzungseinheit (8) zumindest eine Rohrregistereinrichtung (15) aufweist.

8. Gebäudeheiz- und/oder -kühlvorrichtung nach einem der Ansprüche 1 bis 7, wobei die Photovoltaikeinrichtung (2) elektrische Energie zur Steuerung und/oder Regelung der Vorrichtung zur Verfügung stellt.

9. Gebäudeheiz- und/oder -kühlvorrichtung nach einem der Ansprüche 3 bis 8, wobei die an der Außenseite des zugeordneten Gebäudes angeordneten Komponenten der Solareinrichtung (3) und der Photovoltaikeinrichtung (2) bezüglich ihrer Abmessungen und/oder ihrer Form und/oder ihrer Farbe und/oder ihres Designs identisch bzw. im Wesentlichen identisch sind.

10. Verfahren zum Heizen und/oder Kühlen eines Gebäudes, wobei thermische Energie von zumindest einer elektrisch betriebenen Wärmepumpe (1) auf ein fluides Medium übertragen wird und wobei elektrische Energie zum Betreiben der Wärmepumpe (1) von zumindest einer Photovoltaikeinrichtung (2) zur Verfügung gestellt wird.

11. Verfahren nach Anspruch 10, wobei thermische Energie in einer Solareinrichtung (3) auf ein Wärmeträgermedium übertragen wird und wobei die thermische Energie von dem Wärmeträgermedium unmittelbar auf das fluide Medium ohne zusätzliche Erwärmung mit einer Wärmepumpe übertragen wird oder wobei die thermische Energie von dem Wärmeträgermedium unter Zwischenschaltung einer Wärmepumpe (1) auf das fluide Medium übertragen wird.

12. Verfahren nach einem der Ansprüche 10 oder 11, wobei thermische Energie in der Solareinrichtung (3) auf ein Wärmeträgermedium übertragen wird und das Wärmeträgermedium anschließend in die Erdwärmenutzungseinheit (8) und/oder in die Erdspeichereinheit eingeführt wird und die thermische Energie in der Erdwärmenutzungseinheit (8) an das Erdreich abgegeben und im Erdreich gespeichert wird und/oder in dem zumindest einen Speicherbehälter der Erdspeichereinheit gespeichert wird.

13. Verfahren nach Anspruch 12, wobei thermische Energie von dem Erdreich auf ein Wärmeträgermedium übertragen wird und anschließend das Wärmeträgermedium zur Wärmepumpe (1) überführt wird und dort die thermische Energie von dem Wärmeträgermedium auf das fluide Medium übertragen wird.
